(19) **Europäisches Patentamt**

**European Patent Office**

**Office européen des brevets**

(11) **EP 0 730 105 B1**

(12) **EUROPÄISCHE PATENTSCHRIFT**

(45) Veröffentlichungstag und Bekanntmachung des Hinweises auf die Patenterteilung:
**25.07.2001 Patentblatt 2001/30**

(51) Int Cl.⁷: **F16D 48/06**, B60K 41/02
// F16D105:02

(21) Anmeldenummer: **96101721.7**

(22) Anmeldetag: **07.02.1996**

(54) **Steuereinrichtung zur Regelung des Schliessvorganges einer Trennkupplung für Kraftfahrzeuge**

Clutch engagement controller for vehicles

Régulateur d'embrayage pour véhicules

(84) Benannte Vertragsstaaten:
**DE ES FR GB IT SE**

(30) Priorität: **03.03.1995 DE 19507429**
**05.07.1995 DE 19524412**

(43) Veröffentlichungstag der Anmeldung:
**04.09.1996 Patentblatt 1996/36**

(73) Patentinhaber: **Bayerische Motoren Werke Aktiengesellschaft**
**80788 München (DE)**

(72) Erfinder: **Nehse, Wolfgang**
**D-86934 Reichling (DE)**

(56) Entgegenhaltungen:
**EP-A- 0 585 817** **US-A- 4 558 772**
**US-A- 5 072 815**

## Beschreibung

Die Erfindung bezieht sich auf eine Steuereinrichtung zur Regelung des Schließvorgangs einer Trennkupplung und/oder zur Regelung des Öffnungsvorgangs einer Trennkupplung für Kraftfahrzeuge nach dem Oberbegriff der Patentansprüche 1 und 2.

Eine derartige Steuereinrichtung zur automatischen Kupplungsbetätigung ist beispielsweise aus der US 4,558,772 bekannt. Bei dieser Steuereinrichtung wird eine Kupplung derart gesteuert, dass ein vorgegebener Drehzahlverlauf, der beispielsweise im Hinblick auf die Akustik oder den Verschleiß vorteilhaft ist, erreicht wird.

Auch aus der US 5,072,815 ist eine Kupplungssteuerung bekannt, bei der bereits eine qualitative Abhängigkeit zwischen der Motordrehzahl und dem Kupplungsmoment erkannt wird. Jedoch findet keine Regelung des Kupplungsmoments in Abhängigkeit von der Brennkraftmaschinendrehzahl statt.

Eine Steuereinrichtung zur automatischen Kupplungsbetätigung ist beispielsweise auch aus der DE 40 26 659 A1 bekannt. Dei dieser bekannten Steuereinrichtung werden mittels Sensoren sowohl die Antriebsdrehzahl, d. h. die Drehzahl des antriebs- bzw. motorseitigen Kupplungselementes, als auch die Abtriebsdrehzahl, d. h. die Drehzahl des abtriebs- bzw. getriebeseitigen Kupplungselementes erfaßt. Mittels einer Kupplungssteuerung wird mindestens ein Kupplungselement zum öffnen oder Schließen der Trennkupplung axial betätigt. Insbesondere während einer Gangschaltung im Getriebe ist die Trennkupplung geöffnet, wodurch nach einem neu eingelegten Gang die Antriebsdrehzahl und die Abtriebsdrehzahl der Kupplungselemente unterschiedlich sind. Bei der bekannten Steuereinrichtung, die vorzugsweise bei einer Rückschaltung wirksam wird, wird zur Drehzahlanpassung der Kupplungselemente die Antriebsdrehzahl, z. B. durch eine Drosselklappenverstellung bei Brennkraftmaschinen als Antrieb, so gesteuert, daß die Antriebsdrehzahl kurz vor dem Schließen der Trennkupplung immer höher ist als die Abtriebsdrehzahl. Hierdurch wird im Moment des Schließens der Trennkupplung das antriebsseitige Kupplungselement und damit der Antrieb selbst abgebremst. Bei dieser bekannten Steuereinrichtung verbleibt demnach zum Zeitpunkt des vollständigen Schließens der Trennkupplung eine Drehzahldifferenz zwischen der Abtriebsdrehzahl und der Antriebsdrehzahl, die zu einem spürbaren Beschleunigungsstoß führt.

Es ist Aufgabe der Erfindung, eine Steuereinrichtung eingangs genannter Art derart zu verbessern, daß während des Schließvorgangs und/oder während des öffnungsvorgangs einer zumindest teilweise geöffneten bzw. geschlossenen Trennkupplung maximaler Komfort erreicht wird.

Diese Aufgabe wird durch die kennzeichnenden Merkmale der Patentansprüche 1 und 2 gelöst.

Nach Patentanspruch 1 weisen erfindungsgemäß die Mittel zur axialen Verstellung eines Kupplungselements eine Recheneinheit auf, durch die eine Regelung des Kupplungsübertragungsmoments in Abhängigkeit von einem Sollverlauf der Antriebsdrehzahl durchführbar ist.

Der Erfindung liegt der Gedanke zugrunde, daß optimaler Komfort beim Schließvorgang und/oder öffnungsvorgang der Trennkupplung mittels einer Regelung des Kupplungsübertragungsmoments erreicht wird. Optimal hierfür wäre eine Regelung in Abhängigkeit von einem Sollverlauf des Kupplungsübertragungsmoments selbst im Vergleich mit dem momentanen Istverlauf des Kupplungsübertragungsmoments. Da jedoch die Messung des Kupplungsübertragungsmoments zur Erstellung eines Istverlaufes zu aufwendig und kostenintensiv ist, wird erfindungsgemäß eine Regelung in Abhängigkeit von einer einfach erfaßbaren Größe, nämlich der Drehzahl des antriebsseitigen Kupplungselements, das beispielsweise gleich der Brennkraftmaschinendrehzahl ist, durchgeführt. Der Vorteil einer Regelung in Abhängigkeit von dieser Antriebsdrehzahl ist der einfache physikalische Zusammenhang zwischen einem Drehmoment und einer Drehzahländerung unter Berücksichtigung des Trägheitsmoments der rotierenden Massen. Es wird von der allgemeinen Formel ausgegangen:

$$M = 2\pi * J * dn/dt,$$

wobei J das Trägheitsmoment rotierender Massen ist.

Die Antriebsdrehzahl hängt zwar primär von einem auf das System "Antrieb" wirkenden Gesamtdrehmoment ab, das sich aus einem antriebsseitigen Drehmoment in Form einer zugeführten Energie abzüglich des Kupplungsübertragungsmoments in Form einer entnommenen Energie zusammensetzt. Jedoch wird vorzugsweise das antriebsseitige Drehmoment in Form einer zugeführten Energie zur Vereinfachung zumindest zeitweise auf einem vorgegebenen Wert konstant gehalten, während die Regelung des Kupplungsübertragungsmoments allein in Abhängigkeit vom Sollverlauf der Antriebsdrehzahl vorgenommen wird. Hierdurch wird eine einfache Regelstrategie ohne zusätzlichem Hardwareaufwand für einen komfortablen Schließvorgang und/oder Öffnungsvorgang einer Trennkupplung ermöglicht.

Weiterhin weisen die Mittel zur axialen Verstellung eines Kupplungselements eine Recheneinheit auf, durch die eine Steuerung oder Regelung des Kupplungsübertragungsmoments derart durchführbar ist, daß der Verlauf der Antriebsdrehzahl zu Beginn des Schließvorganges, vorzugsweise für eine vorgegebene Zeit, nicht durch einen positiven Beitrag eines antriebsseitigen Drehmoments beeinflußt wird.

Insbesondere für eine vorgegebene Zeit, die vorzugsweise auch durch das Erreichen eines vorgegebenen Antriebsdrehzahlwertes definiert werden kann, wird das antriebsseitige Drehmoment in Form einer zugeführten Energie nicht nur konstant sondern auch so gering gehalten, daß es keinen Beitrag zur Beeinflussung des Antriebsdrehzahlverlaufs leistet. Vorzugsweise wird das antriebsseitige Drehmoment konstant auf einem bezüglich des Kupplungsübertragungsmoments negativen Wert gehalten, der üblicherweise ohnehin bei einem Gangwechsel durch Momentenreduzierung vorgegeben wird. Somit wird erfindungsgemäß z.B. bei einem Schließvorgang der Trennkupplung der Abbau der Drehzahldifferenz zwischen dem abtriebsseitigen Kupplungselement und dem antriebsseitigen Kupplungselement größtenteils ausschließlich durch die entsprechende Einstellung des Kupplungsübertragungsmoments vorgenommen. Hierdurch wird insbesondere zu Beginn des Schließvorgangs ein harmonischer Beschleunigungsverlauf erreicht, der bei gleichzeitiger Regelung oder Steuerung des Kupplungsübertragungsmoments und des antriebsseitigen Drehmoments aufgrund des komplexen Zusammenspiels der Kupplung, des Getriebes und des Antriebs kaum erreichbar ist. Hierdurch wird auf besonders einfache Weise eine Komfortverbesserung erreicht.

Zusätzlich oder alternativ sind erfindungsgemäß auch Mittel zur Steuerung oder Regelung des antriebsseitigen Drehmoments vorhanden. Es wird eine Steuerung oder Regelung des Kupplungsübertragungsmoments und/oder des antriebsseitigen Drehmoments derart vorgenommen, daß das Kupplungsübertragungsmoment kleiner als das antriebsseitige Drehmoment ist, wenn der Verlauf der Antriebsdrehzahl ansteigen soll und das Kupplungsübertragungsmoment größer als das antriebsseitige Drehmoment ist, wenn der Verlauf der Antriebsdrehzahl abfallen soll.

Dieser Erfindung liegt der Gedanke zugrunde, daß z.B. der Schließvorgang der Trennkupplung bei besonders hohen Anforderungen an den Komfort auf Kosten eines Nachschwingens der Antriebsdrehzahl während des Abbaus der Drehzahldifferenz vorgenommen werden kann. Hierbei wird davon ausgegangen, daß für einen Fahrzeuginsassen durch ein langsames Schließen der Kupplung der beschleunigungsabhängige Komfort erheblich gesteigert werden kann, während ein kurzes geringes Anheben der Antriebsdrehzahl nur geringe akustische Störeinflüsse bewirkt.

Es wird demnach erfindungsgemäß eine Änderung des Vorzeichens des Gradienten im Antriebsdrehzahlverlauf zugelassen, um daran angepaßt eine entsprechende Steuerung oder Regelung des Kupplungsübertragungsmoments und/oder des antriebsseitigen Drehmoments, vorzugsweise in Abhängigkeit von einem vorgegebenen Sollverlauf der Antriebsdrehzahl, vorzunehmen. Hierdurch wird auf besonders einfache Weise optimaler Komfort während des Schließvorgangs und/oder während des Öffungsvorgangs einer Trennkupplung erreicht.

Ergänzend wird darauf hingewiesen, daß die Erfindung ebenso auch eine Kombination der Gegenstände nach Anspruch 1 und 2 umfaßt. Somit ist eine vorteilhafte Weiterbildung der Erfindungen die Kombination der Gegenstände der Patentansprüche 1 und 2.

In der Zeichnung sind Ausführungsbeispiele der Erfindung dargestellt. Es zeigt

Fig. 1 eine erfindungsgemäße Steuereinrichtung, die eine Regelung des Kupplungsübertragungsmoments in Abhängigkeit von einem Sollverlauf der Antriebsdrehzahl zu Beginn des Schließvorgangs ohne positiven Beitrag eines antriebsseitigen Drehmoments durchführt,

Fig. 2 eine erfindungsgemäße Steuereinrichtung, die eine Regelung zur Verlängerung des Schließvorganges vornimmt, bei der ein Nachschwingen der Antriebsdrehzahl zugelassen wird und

Fig. 3 eine erfindungsgemäße Steuereinrichtung, die während eines Öffnungsvorgangs der Trennkupplung eine Regelung des Kupplungsübertragungsmoments in Abhängigkeit von einem Sollverlauf der Antriebsdrehzahl und/oder von einem gewünschten Öffnungsverlauf der Trennkupplung durchführt.

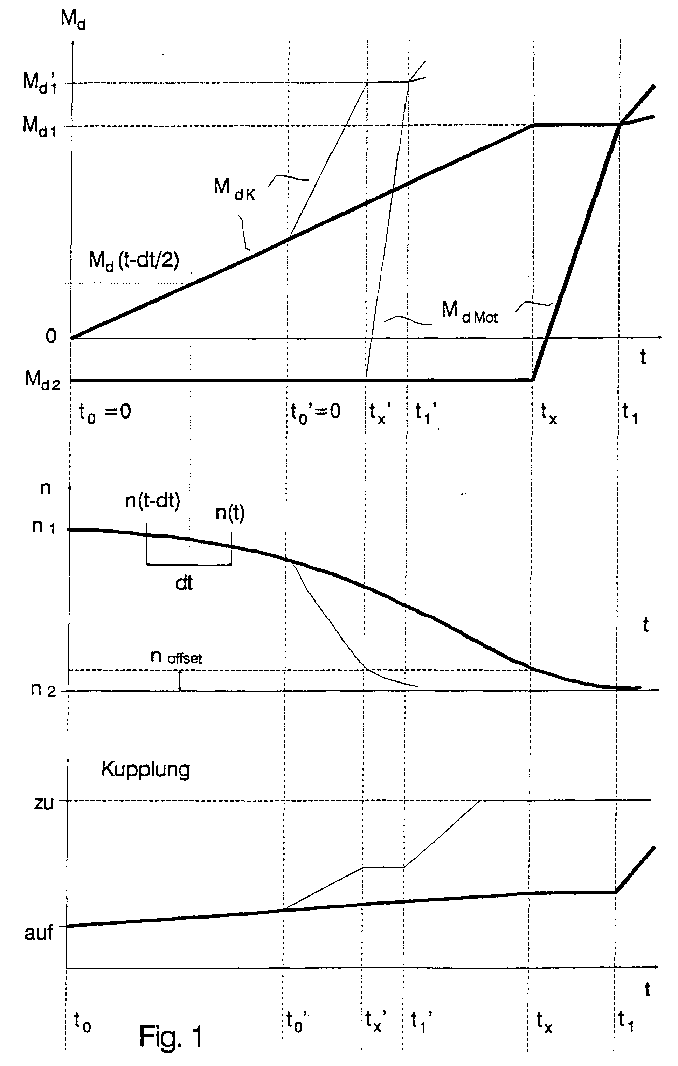

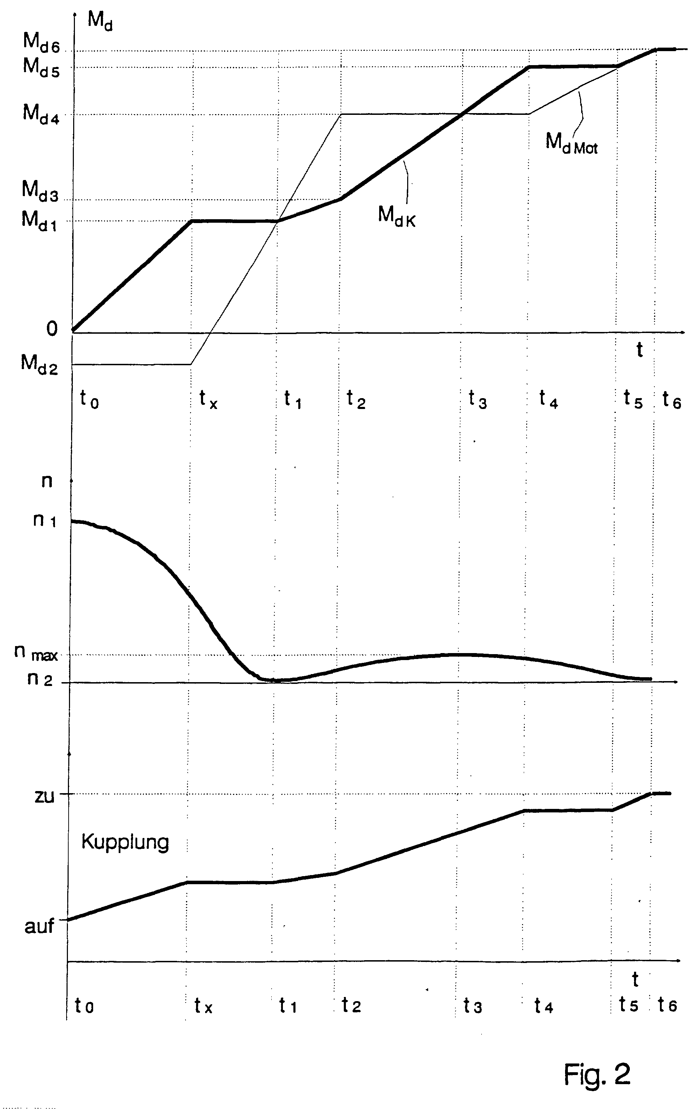

Die erfindungsgemäße Steuereinrichtung wird in Fig. 1 und Fig. 2 am Beispiel einer Hochschaltung dargestellt: In Fig. 1 ist im oberen Diagramm auf der Ordinate das Drehmoment $M_d$ und auf der Abszisse die Zeit t aufgetragen. Es werden zum einen der Verlauf des Kupplungsübertragungsmoments $M_{dK}$ und zum anderen der Verlauf des antriebsseitigen Drehmoments $M_{dMot}$ dargestellt. Im mittleren Diagramm ist die Antriebsdrehzahl n über der Zeit und im unteren Diagramm der Zustand der Kupplung über der Zeit eingezeichnet.

Zum Zeitpunkt $t_0 = 0$ ist der eigentliche Schaltvorgang im Sinne des Einlegens eines neuen Ganges bereits erfolgt, so daß der Schließvorgang der geöffneten Kupplung beginnen kann. Zu Beginn des Schließvorgangs wird bis zu dem vorgegebenen Zeitpunkt $t_X$ lediglich die Regelung des Kupplungsübertragungsmoments $M_{dK}$ in Abhängigkeit von dem Sollverlauf der Antriebsdrehzahl n, wie im mittleren Diagramm dargestellt, vorgenommen. Das antriebsseitige Drehmoment $M_{dMot}$ wird vom Zeitpunkt $t_0$ bis zum Zeitpunkt $t_X$ konstant bem negativen Drehmomentwert $M_{d2}$, der bereits während des Gangwechsels eingestellt wurde, beibehalten. Das antriebsseitige Drehmoment $M_{dMot}$ mit dem konstanten Wert $M_{d2}$ leistet bis zum Zeitpunkt $t_X$ keinen positiven Beitrag zum Verlauf der Antriebsdrehzahl n. Die Zeitspanne $t_X - t_0$ wird derart definiert, daß zum Zeitpunkt $t_X$ ein Antriebsdrehzahlwert $n_2 + n_{offset}$ erreicht ist. Der Antriebsdrehzahlwert $n_2$ entspricht der neuen Abtriebsdrehzahl des getriebeseitigen Kupplungselements nach einer Hochschaltung. Zum Abbau der Drehzahldifferenz zwischen dem abtriebsseitigen und dem antriebsseitigen Kupplungselement muß in diesem Fall die Antriebsdrehzahl um den Wert $n_2 - n_1$ reduziert werden.

Der Wert der Antriebsdrehzahldifferenz $n_{offset}$ entspricht einem Drehzahlabfall, der durch den Kupplungseingriff zwischen den Zeitpunkten $t_x$ und $t_1$ stattfindet. Dieser Wert $n_{offset}$ kann zusätzlich in Abhängigkeit vom neu eingelegten Gang, der Beschleunigung oder dem Fahrwiderstand berechnet und adaptiert werden. Vom Zeitpunkt $t_0$ bis $t_x$ wird entsprechend dem Sollverlauf der Antriebsdrehzahl n vom Wert $n_1$ bis zum Wert $n_2 + n_{offset}$ ein zum Erreichen dieses Sollverlaufs notwendiges Kupplungsübertragungsmoment $M_{dK}$ nach folgender Formel berechnet:

$$M_d = + M_{dMot} - M_{dK} = 2\pi J * dn/dt,$$

wobei $M_{dMot}$ einen konstanten Wert von $M_{d2}$ aufweist. Zur Regelung des Kupplungsübertragungsmoments $M_{dK}$ wird diese Formel nach der Antriebsdrehzahl n aufgelöst, um daraus den aus dem momentanen Kupplungsübertragungsmoment $M_{dK}$ resultierenden Istverlauf der Antriebsdrehzahl n zu ermitteln.

Zur Vereinfachung wird in Fig. 1 ein rampenförmiger Verlauf des Kupplungsübertragungsmoments $M_{dK}$ und eine vorgegebene Zeitspanne dt, die z. B. der Abtastzykluszeit des Rechenprogramms entspricht, gewählt. Mit dieser Vereinfachung ergeben sich für den Zeitpunkt $t_x$, für das momentan einzustellende Kupplungsübertragungsmoment $M_{dK} (t - dt/2)$ und für die daraus resultierende Antriebsdrehzahl n (t) zum Zeitpunkt t folgende Formeln:

$$1. \quad t_x= \frac{2\pi J * (n(t_0) - (n_2+n_{offset}))}{(M_{d1} + M_d(t_0))/2 - M_{d2}}$$

$$2. \quad M_d(t-dt/2)= \frac{(t-dt/2)}{t_x} * (M_{d1}-M_d(t_0)) + Md(t_0)$$

$$3. \quad n(t)= \frac{2\pi J/dt * n(t-dt) - M_d(t-dt/2) + M_{d2}}{2\pi J/dt}$$

Dem einzustellenden Kupplungsübertragungsmoment $M_{dK}$ entspricht jeweils eine axiale Verstellungsposition eines Kupplungselements, zwischen einer vollständig offenen ("auf") und einer vollständig geschlossenen ("zu") Kupplung. Wenn zum Zeitpunkt $t_x$ in etwa der Drehzahlwert $n_2 + n_{offset}$ erreicht ist, beginnt eine kontinuierliche Erhöhung des antriebsseitigen Drehmoments $M_{dMot}$ bis zum Zeitpunkt $t_1$, zu dem das antriebsseitige Drehmoment $M_{dMot}$ den Wert des momentan vorliegenden Kupplungsübertragungsmoments $M_{dK} = M_{d1}$ erreicht hat. Vorzugsweise wird im Zeitraum $t_1 - t_x$ das momentane Kupplungsübertragungsmoment $M_{dK}$ konstant auf dem Wert $M_{d1}$ gehalten, d. h. die Stellung der Kupplung wird im selben Zeitraum auf der zum Zeitpunkt $t_x$ eingestellten Position gehalten. Der Wert $M_{d1}$ wird beispielsweise bei Brennkraftmaschinen als Antrieb derart gewählt, daß er einem durch Zündwinkelspätverstellung minimal möglichen antriebsseitigen Drehmoment entspricht.

Ein möglicher weiterer Verlauf nach dem Zeitpunkt $t_1$ wird im Ausführungsbeispiel nach Fig. 2 dargestellt.

In Fig. 1 sind mit dünneren Linien noch mögliche Verläufe des Kupplungsübertragungsmoments $M_{dK}$, des antriebsseitigen Drehmoments $M_{dMot}$, der Antriebsdrehzahl n und der Kupplungsposition dargestellt, die sich beispielsweise dann ergeben, wenn während des Schließvorganges vom Fahrer eine erhöhte Leistung angefordert wird, z. B. in Form einer Erhöhung des Fahrpedalwinkels. In diesem Fall werden dieselben Maßnahmen ergriffen wie im Beispiel entsprechend der dick gezeichneten Linien mit der Ausnahme, daß sämtliche Verläufe erhöhte Gradienten aufweisen. Hieraus geht hervor, daß sowohl Anforderungen an den Komfort als auch Anforderungen an die Sportlichkeit erfüllt werden können.

In Fig. 2 entsprechen sämtliche Verläufe vom Zeitpunkt $t_0$ bis zum Zeitpunkt $t_1$ den Verläufen in Fig. 1 zu den Zeitpunkten $t_0$ bzw. $t_0'$ bis zum Zeitpunkt $t_1$ bzw. $t_1'$. Zum Zeitpunkt $t_1$ ist im unteren Diagramm sowohl in Fig. 1 als auch in Fig. 2 ersichtlich, daß die Kupplung vom vollständig geschlossenen Zustand noch weit entfernt ist. Es wäre beispielsweise möglich, mit einem steilen Gradienten des Kupplungsmoments $M_{dK}$ die Kupplung schnellstmöglich zu schließen. In Fig. 2 wird jedoch ein komfortoptimierter Verlauf dargestellt, bei dem der Schließvorgang nach dem Abbau der Drehzahldifferenz verlängert werden soll, um die Kupplung möglichst weich zu schließen. Hierzu wird ein Nachschwingen im Verlauf der Antriebsdrehzahl n bis zu einer maximal zulässigen Antriebsdrehzahl $n_{max}$ zugelassen. Vom Zeitpunkt $t_1$ bis zum Zeitpunkt $t_3$ soll demnach der Verlauf der Antriebsdrehzahl n bis zum Wert $n_{max}$ nochmals ansteigen. Während dieser Anstiegsphase im Antriebsdrehzahlverlauf wird das Kupplungsübertragungsmoment $M_{dK}$ niedriger gehalten als das antriebsseitige Drehmoment $M_{dMot}$. Vorzugsweise wird im Wendepunkt zum Zeitpunkt $t_2$ entsprechend dem Wechsel des Gradienten im Antriebsdrehzahlverlauf eine Änderung in der Steigung des Verlaufs des Kupplungsübertragungsmoments $M_{dK}$ vorgenommen. Zum Zeitpunkt $t_3$ weist der Sollverlauf der Antriebsdrehzahl n einen Gradienten mit dem Wert 0 beim maximal zulässigen Antriebsdrehzahlwert $n_{max}$ auf. Zu diesem Zeitpunkt $t_3$ sind das Kupplungsübertragungsmoment $M_{dK}$ und das antriebsseitige Drehmoment $M_{dMot}$ gleich dem Drehmomentenwert $M_{d4}$.

Zwischen dem Zeitpunkt $t_3$ und $t_5$ soll der Verlauf der Antriebsdrehzahl n abfallen. In diesem Zeitbereich wird erfindungsgemäß das Kupplungsübertragungsmoment $M_{dK}$ größer als das antriebsseitige Drehmoment $M_{dMot}$ eingestellt. Zum Zeitpunkt $t_5$ ist in etwa

wieder der Antriebsdrehzahlwert $n_2 + n_{offset}$ erreicht, so daß zwischen dem Zeitraum $t_6 - t_5$ die Kupplung vollständig geschlossen wird. Ab dem Zeitpunkt $t_6$, zu dem die Kupplung wieder vollständig geschlossen ist, ist der Wert des Kupplungsübertragungsmoments $M_{dK}$ gleich dem Wert des antriebsseitigen Drehmoments $M_{dMot}$. Im unteren Diagramm der Fig. 1 und 2 ist jeweils der proportionale Verlauf der Kupplungsposition entsprechend dem eingestellten Kupplungsübertragungsmoment $M_{dK}$ ersichtlich.

Ergänzend wird darauf hingewiesen, daß in den Ausführungsbeispielen zwar lediglich rampenförmige Kurvenverläufe dargestellt sind, daß jedoch beliebige Verläufe kontinuierlicher Art denkbar sind. Rampenförmige Verläufe sind jedoch besonders vorteilhaft, um bei den Rechenmodellen für die Drehmomentwerte und die Antriebsdrehzahlwerte Vereinfachungen annehmen zu können.

Ergänzend wird auf zwei mögliche Ausnahmefälle zum Zeitpunkt $t_x$ hingewiesen: Zum Zeitpunkt $t_x$ kann aufgrund verschiedener Einflüsse ein Antriebsdrehzahlwert n erreicht werden, der entweder zwischen dem Wert $n_2$ und dem Wert $n_2 + n_{offset}$ oder sogar unterhalb des Wertes $n_2$ liegt. Im letzten Fall wird vorzugsweise zunächst das antriebsseitige Drehmoment zumindest auf den momentanen Wert des Kupplungsübertragungsmoments $M_{dK}$ angehoben. Daraufhin und auch im ersten Fall wird nochmals eine Anhebung der Antriebsdrehzahl n dadurch erreicht, daß zunächst das antriebsseitige Drehmoment $M_{dMot}$, auch bei steigendem Kupplungsübertragungsmoment, größer gehalten wird als das Kupplungsübertragungsmoment. Das weitere Vorgehen entspricht wieder dem Ausführungsbeispiel nach Fig. 2, entsprechend eines gewünschten Anstiegs oder eines gewünschten Abfalls des Antriebsdrehzahlverlaufs.

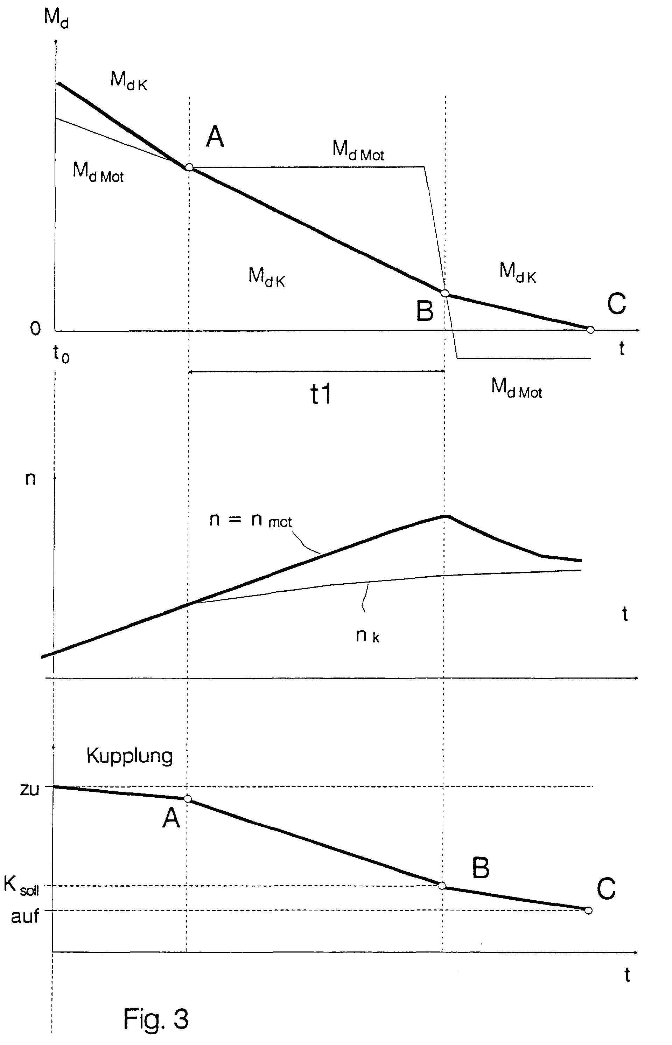

Fig. 3 zeigt einen Öffnungsvorgang der Kupplung. Im oberen Diagramm ist der Verlauf des Kupplungsübertragungsmoments $M_{dK}$ und des antriebsseitigen Drehmoments $M_{dMot}$ dargestellt. Im mittleren Diagramm ist die Antriebsdrehzahl n über der Zeit t und im unteren Diagramm der Zustand der Kupplung über der Zeit t eingezeichnet.

Zum Zeitpunkt $t_0 = 0$ erfolgt ein Schaltbefehl zum öffnen der Kupplung, z. B. in Form eines Gangwechselwunsches, so daß der Öffnungsvorgang der geschlossenen Kupplung ("zu") beginnt. Zu Beginn des Öffnungsvorgangs wird, beispielsweise durch Zündwinkelspätverstellung oder durch Zylinderausblendung, eine Reduzierung des antriebsseitigen Drehmoments $M_{dMot}$ vorgenommen. Bis zum Zeitpunkt A liegt das antriebsseitige Drehmoment $M_{dMot}$ unterhalb des Kupplungsübertragungsmoments $M_{dK}$ und wird maximal möglich reduziert. Bis zum Zeitpunkt A, an dem das Kupplungsübertragungsmoment $M_{dK}$ auf den Wert des antriebsseitigen Drehmoments $M_{dMot}$ übergeführt worden ist, findet bereits eine geringfügige Öffnung der Kupplung statt, die insbesondere lastabhängig ist.

Zwischen dem Zeitpunkt A und dem Zeitpunkt B, die durch eine vorgegebene Zeitspanne t1 definiert werden können, liegt das antriebsseitige Drehmoment $M_{dMot}$ oberhalb des Kupplungsübertragungsmoments $M_{dK}$ und wird konstant auf dem zum Zeitpunkt A erreichten Wert gehalten. Dadurch erhöht sich die Antriebsdrehzahl n gegenüber der abtriebsseitigen Getriebeeingangsdrehzahl $n_k$. Kinetische Energie auf der Antriebsseite wird aufgebaut, um sie zwischen den Zeitpunkten B und C zur Komfortoptimierung wieder abbauen zu können.

Der Verlauf des Kupplungsübertragungsmoments $M_{dK}$ wird zwischen den Zeitpunkten A und B in Abhängigkeit von einem gewünschten Verlauf der Antriebsdrehzahl n geregelt oder in Abhängigkeit von einem vorgegebenen öffnungsverlauf der Kupplung gesteuert. Vorzugsweise wird der Verlauf des Kupplungsübertragungsmoments $M_{dK}$ derart gesteuert und/oder geregelt, daß zum Zeitpunkt B ein vorgegebener öffnungsgrad $K_{soll}$ und/oder das Maximum des Verlaufs der Antriebsdrehzahl n erreicht wird. Obwohl zwischen den Zeitpunkten A und B das antriebsseitige Drehmoment $M_{dMot}$ nicht weiter reduziert wird, ist ein sehr flacher Verlauf des Kupplungsübertragungsmoments $M_{dK}$ möglich, wodurch optimaler Komfort erreicht wird.

Ab dem Zeitpunkt B wird der Öffnungsvorgang der Kupplung sowie der Verlauf der Antriebsdrehzahl n nicht mehr durch einen positiven Beitrag des antriebsseitigen Drehmoments $M_{dMot}$ beeinflußt. Die zwischen den Zeitpunkten A und B antriebsseitig aufgebaute kinetische Energie wird wieder abgebaut. Dadurch ist zwischen den Zeitpunkten B und C ein noch flacherer Verlauf des Kupplungsübertragungsmoments $M_{dK}$ möglich, durch den sich ein sehr langsamer und komfortabler Übergang in den vollständig geöffneten Zustand der Kupplung ("auf") ergibt. Zwischen den Zeitpunkten B und C liegt das antriebsseitige Drehmoment $M_{dMot}$ wieder unterhalb des Kupplungsübertragungsmoments $M_{dK}$, wodurch der Verlauf der Antriebsdrehzahl n abfällt. Hierdurch kann die Antriebsdrehzahl $n = n_{mot}$ wieder an die abtriebsseitige Getriebeeingangsdrehzahl $n_k$ herangeführt werden.

Mit diesen Ausführungsbeispielen ist auf einfache und kostengünstige Weise eine Komfortoptimierung bezüglich eines Schließvorgangs und/oder eines öffnungsvorgangs einer Trennkupplung für Kraftfahrzeuge geschaffen.

## Patentansprüche

1.  Steuereinrichtung zur Regelung des Schließvorganges einer Trennkupplung für Kraftfahrzeuge zum automatischen Abbau der Drehzahldifferenz zwischen dem abtriebsseitigen Kupplungselement und dem antriebsseitigen Kupplungselement und/oder zur Regelung des Öffnungsvorgangs einer Trennkupplung mit Mitteln zur Erfassung der Antriebsdrehzahl und mit Mitteln zur axialen Verstellung zumindest eines Kupplungselements der Trennkupplung, wobei die Mittel zur axialen Verstellung eine Recheneinheit aufweisen, durch die eine Regelung des Kupplungsübertragungsmoments ($M_{dK}$) in Abhängigkeit von einem Sollverlauf der Antriebsdrehzahl (n) durchführbar ist,
<u>dadurch gekennzeichnet, daß</u> die Mittel zur axialen Verstellung eine Recheneinheit aufweisen, durch die eine Steuerung oder Regelung des Kupplungsübertragungsmoments ($M_{dK}$) derart durchführbar ist, daß der Verlauf der Antriebsdrehzahl (n) zu Beginn des Schließvorganges ($t_0$ bis $t_x$) nicht durch einen positiven Beitrag eines antriebsseitigen Drehmoments ($M_{dMot}$) beeinflußt wird.

**2.** Steuereinrichtung zur Regelung des Schließvorganges einer Trennkupplung für Kraftfahrzeuge zum automatischen Abbau der Drehzahldifferenz zwischen dem abtriebsseitigen Kupplungselement und dem antriebsseitigen Kupplungselement und/oder zur Regelung des Öffnungsvorgangs einer Trennkupplung mit Mitteln zur Erfassung der Antriebsdrehzahl und mit Mitteln zur axialen Verstellung zumindest eines Kupplungselements der Trennkupplung, wobei die Mittel zur axialen Verstellung eine Recheneinheit aufweisen, durch die eine Regelung - des Kupplungsübertragungsmoments ($M_{dK}$) in Abhängigkeit von einem Sollverlauf der Antriebsdrehzahl (n) durchführbar ist,
<u>dadurch gekennzeichnet, daß</u> Mittel zur Steuerung oder Regelung des antriebsseitigen Drehmoments ($M_{dMot}$) vorhanden sind und daß die Mittel zur axialen Verstellung und die Mittel zur Steuerung oder Regelung des antriebsseitigen Drehmoments eine Recheneinheit aufweisen, durch die eine Steuerung oder Regelung des Kupplungsübertragungsmoments ($M_{dK}$) und/oder des antriebsseitigen Drehmoments ($M_{dMot}$) derart durchführbar ist, daß das Kupplungsübertragungsmoment ($M_{dK}$) kleiner als das antriebsseitige Drehmoment ($M_{dMot}$) ist, wenn der Verlauf der Antriebsdrehzahl (n) ansteigen soll, und umgekehrt.

## Claims

**1.** A device for controlling the process of engagement of a vehicle clutch in order automatically to reduce the difference in speed between the driven-side clutch element and the drive-side clutch element and/or for controlling the process of opening a clutch comprising means for detecting the drive speed and means for axially adjusting at least one clutch element, wherein the means for axial adjustment comprise a computer unit for adjusting the torque ($M_{dK}$) transmitted by the clutch in dependence on a set curve of the drive speed (n), characterised in that the axial adjustment means comprise a computer unit for open-loop or closed-loop control of the torque ($M_{dK}$) transmitted by the clutch so that the curve of the drive speed (n) at the beginning of the engagement process ($t_0$ to $t_x$) is not influenced by a positive contribution by a drive-side torque ($M_{dMot}$).

**2.** A device for controlling the process of engagement of a vehicle clutch in order automatically to reduce the difference in speed between the driven-side clutch element and the drive-side clutch element and/or for controlling the process of opening a clutch comprising means for detecting the drive speed and means for axially adjusting at least one clutch element, wherein the means for axial adjustment comprise a computer unit for adjusting the torque ($M_{dK}$) transmitted by the clutch in dependence on a set curve of the drive speed (n), characterised in that means are provided for open-loop or closed-loop control of the drive-side torque ($M_{dMot}$) and the axial adjustment means and the open-loop or closed-loop control means for the drive-side torque comprise a computer unit for open-loop or closed-loop control of the torque ($M_{dK}$) transmitted by the clutch and/or of the drive-side torque ($M_{dMot}$) so that the transmitted clutch torque ($M_{dK}$) is less than the drive-side torque ($M_{dMot}$) when the curve of the drive speed (n) is due to increase, and vice versa.

## Revendications

**1.** Installation de commande pour réguler l'opération de fermeture d'un embrayage de véhicule, pour diminuer automatiquement la différence des vitesses de rotation entre l'élément d'embrayage du côté de sortie et l'embrayage du côté moteur, et/ou pour réguler l'opération d'ouverture d'un embrayage, avec des moyens de saisie du régime moteur et des moyens de réglage axial d'au moins un élément de l'embrayage, les moyens de réglage axial comprenant une unité de calcul qui régule le couple transmis par l'embrayage ($M_{dK}$) en fonction d'une courbe de consigne du régime moteur (n),
caractérisée en ce que
les moyens de réglage axial comprennent une unité de calcul qui exécute une commande ou une régulation du couple transmis par l'embrayage ($M_{dK}$) pour que la courbe du régime moteur (n) au début de l'opération de fermeture ($t_0$ jusqu'à $t_x$) ne soit pas influencée par une participation positive d'un couple moteur ($M_{dMot}$).

**2.** Installation de commande pour réguler l'opération de fermeture d'un embrayage de véhicule automobile pour diminuer automatiquement la différence de vitesse de rotation entre l'élément d'embrayage du côté de sortie et l'élément d'embrayage du côté moteur, et/ou pour réguler l'ouverture d'un embrayage, avec des moyens de saisie du régime moteur et des moyens de réglage axial d'au moins un élément de l'embrayage, les moyens de réglage axial comprenant une unité de calcul qui effectue une régulation du couple transmis par l'embrayage ($M_{dK}$) en fonction d'une courbe de consigne du régime moteur ($n$),
caractérisée en ce que
des moyens de commande ou de régulation du couple moteur ($M_{dMot}$) sont prévus, et les moyens de réglage axial ainsi que les moyens de commande ou de régulation du couple moteur comprennent une unité de calcul qui commande ou régule le couple transmis par l'embrayage ($M_{dK}$) et/ou le couple moteur ($M_{dMot}$), pour que le couple transmis par l'embrayage ($M_{dK}$) soit inférieur au couple moteur ($M_{dmot}$) si la courbe du régime moteur ($n$) doit augmenter ou inversement.

Fig. 1

Fig. 2

Fig. 3